Europäisches Patentamt

European Patent Office

Office européen des brevets

(11) Publication number: **0 368 627**
**A2**

## (12) EUROPEAN PATENT APPLICATION

(21) Application number: **89311527.9**

(22) Date of filing: **07.11.89**

(30) Priority: **08.11.88 GB 8826127**

(43) Date of publication of application:
**16.05.90 Bulletin 90/20**

(84) Designated Contracting States:
**DE ES FR IT NL**

(51) Int. Cl.⁵: **G11B 23/023, G11B 23/40**

(71) Applicant: **Baxter, John**
**32 Elaine Close**
**Exeter Devon EX4 9BP(GB)**

(72) Inventor: **Baxter, John**
**32 Elaine Close**
**Exeter Devon EX4 9BP(GB)**

(74) Representative: **Craske, Stephen Allan**
**Craske & Co. Arden House Masons Road**
**Stratford-upon-Avon Warwickshire CV37**
**9YW(GB)**

(54) **Cassette container.**

(57) A pocket 10 is secured to an external face of a video cassette box 1 to contain a record card 19. The pocket comprises front and rear sheets 11, 12 of transparent plastics material which are welded together along three of their edges 13, 14, 15 , and the rear sheet carries a layer of pressure-sensitive adhesive for attaching the pocket to the box 1. The video cassette is allocated a serial number by the owner which is marked on the cassette and on the record card 19. A record of any material recorded on the cassette can be written onto the card which can be read through the pocket 10 so that there is less risk of the card being lost, and the card can be read with the cassette inserted into a video recorder/player.

EP 0 368 627 A2

## CASSETTE CONTAINER

TECHNICAL FIELD OF THE INVENTION

This invention relates to containers for re-recordable cassettes, particularly video cassettes, although the invention may also be applicable to other kinds of cassette such as those containing computer discs for example.

BACKGROUND

The problem of identifying material recorded on a reusable video cassette is well known to owners of video recorders. The way normally suggested by the manufacturers of the blank cassettes is to write the information onto an adhesive label which they provide for attachment to the cassette, but such labels quickly become spoiled and unsightly. Furthermore, the information cannot be read whilst the cassette is actually loaded into the machine.

A solution often adopted in preference by many people is to write the material onto a scrap of paper inserted into the cassette container, but these can easily be lost or muddled up with those for other cassettes.

US 4 643 301 discloses a holder for a video cassette which is provided with a snap-on plastic plate. This plate forms a pocket for holding a printed booklet that complements material pre-recorded on the cassette.

SUMMARY OF THE INVENTION

The present invention provides a container for a recordable cassette, in which an external face of the container is provided with a pocket having an opening extending along one of its edges, the container being characterised by a record sheet for insertion into and removal from the pocket via the said opening, the record sheet being provided with a space intended for the user to enter a record of any material recorded on the cassette.

The pocket may conveniently comprise superimposed front and rear sheets which are secured together along at least two opposed edges. The rear sheet may be adhesively secured to the container.

The invention also provides a record sheet holder suitable for use in the container, comprising substantially rectangular front and rear sheets joined together along three of their edges, the rear sheet having a layer of pressure-sensitive adhesive, and the front sheet being formed of transparent material and having a finger notch formed in one of its edges to enable the user to grip a record sheet inserted into the holder.

The record sheet preferably has an additional space intended for or containing a cassette identification character which is also carried by a cassette within the container.

The cassette container may be of the type comprising a moulded plastics box having a hinged lid or it may be of the type comprising a cardboard container open along one edge for insertion and removal of the cassette.

BRIEF DESCRIPTION OF THE DRAWINGS

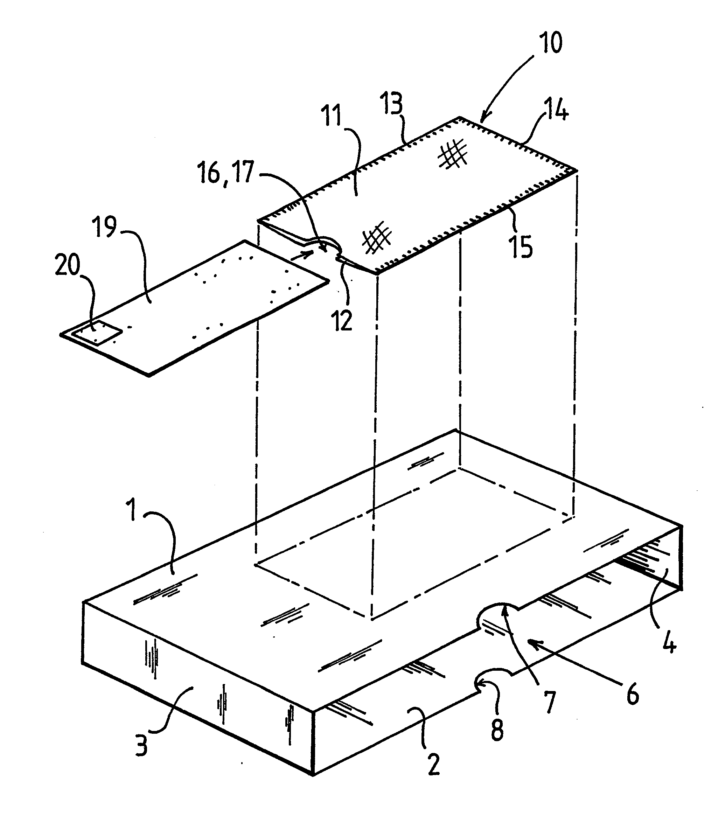

The invention will now be exemplified in the accompanying drawing, which is an exploded perspective view of a video cassette box in accordance with the invention.

DETAILED DESCRIPTION OF THE DRAWINGS

The cassette box is of known form and has relatively closely spaced rectangular upper and lower walls 1, 2, end walls 3, 4 and a rear wall (not shown). The front 6 of the box forms a slot-shaped opening through which a standard domestic VHS or Betamax video cassette can be inserted into the box. The front edges of the upper and lower walls 1, 2 have opposed finger notches 7 and 8 for gripping the cassette to facilitate its withdrawal from the box.

In accordance with the invention a pocket 10 is secured to the upper wall 1. This pocket comprises two substantially rectangular superimposed upper and lower sheets 11 and 12 of transparent flexible and non-brittle plastics material. These are bonded together by a known bonding process, e.g. heat welding, along three of their common edges 13, 14 and 15, and the lower face of the lower sheet 12 is coated with a layer of transparent pressure-sensitive adhesive enabling the pocket to be secured to the upper wall 1 in any convenient position. Opposed finger notches 16, 17 are also provided in the open edges of the superimposed sheets 11 and 12. A rectangular record card 19 supplied with the pocket can be inserted into the pocket between sheets 11 and 12 through the open edge, the card being a close fit in the pocket. The card is blank save for a box 20 in one corner, although the blank area of the card could also contain a series of horizontal lines.

In use, the video cassette is allocated a serial number by the owner which is marked on the cassette and also in the box 20 on the record card. A record of any material recorded on the cassette can be written onto the card and the card inserted into the pocket. The material written on the card is visible through the upper sheet 11 without removing the card from the pocket so that there is less risk of the card being lost, and the card can be read with the cassette inserted into a video recorder/player. Any material printed on the box can be read through the pocket if required by removing the card from the pocket. When the information written on the card is out of date the card can simply be removed from the pocket, amended, and reinserted, or a fresh card can be inserted after first writing the serial number of the cassette upon it.

The pockets could be sold in packs together with a supply of blank record cards. The pressure-sensitive adhesive would be protected by a sheet of peelable backing material.

The pocket could of course be secured to any wall of the box within the scope of the invention.

## Claims

1. A container for a recordable cassette, in which an external face (1) of the container is provided with a pocket (10) having an opening extending along one of its edges,
characterised by a record sheet (19) for insertion into and removal from the pocket (10) via the said opening, the record sheet being provided with a space intended for the user to enter a record of any material recorded on the cassette.

2. A container according to Claim 1, in which the pocket comprises a transparent portion through which the said space on the record sheet (19) is visible.

3. A container according to Claim 1 or 2, in which an edge of the pocket has a finger notch (16, 17) part-way along its length.

4. A container according to any preceding claim, in which the pocket comprises superimposed front and rear sheets (11, 12) which are secured together along at least two opposed edges (13, 15).

5. A container according to Claim 4, in which the rear sheet (12) is secured to the container by a pressure-sensitive adhesive provided on the rear sheet.

6. A container according to Claim 4 or 5, in which the rear sheet (12) is transparent or substantially so.

7. A container according to Claim 4, 5 or 6, in which the edges (14) of the front and rear sheets which are opposite to the said opening are secured together.

8. A container according to any preceding claim, in which the record sheet (19) has an additional space (20) intended for or containing a cassette identification character for distinguishing one cassette from a similar re-recordable cassette.

9. A container according to Claim 8 in combination with a re-recordable cassette bearing the same identification character.

10. A record sheet holder (10) suitable for use in a container according to any preceding claim, comprising substantially rectangular front and rear sheets (11, 12) joined together along three of their edges (13, 14, 15), the rear sheet (12) having a layer of pressure-sensitive adhesive, and the front sheet (11) being formed of transparent material and having a finger notch (16, 17) formed in one of its edges to enable the user to grip a record sheet (19) inserted into the holder.